# EUROPEAN PATENT SPECIFICATION

(11) **EP 3 896 216 B1**
(45) Date of publication and mention of the grant of the patent: **18.02.2026**
(21) Application number: 21020149.7
(22) Date of filing: 15.03.2021
(51) Int. Cl.: D06N 7/00, B29C 65/72, D05C 17/02, E01C 13/08

(54) **PILE FABRICS AND SYSTEMS AND METHODS FOR FORMING PILE FABRICS**
FLORSTOFFE, SYSTEME UND DESSEN HERSETLLUNGSVERFAHREN
TISSUS À POILS, SYSTÈMES ET LEURS PROCÉDÉS DE FABRICATION

(30) Priority: 19.03.2020 US 202062991897 P; 15.02.2021 US 202117175829
(43) Date of publication of application: 20.10.2021
(73) Proprietor: ProGlobal Products LLC, Dalton, Georgia 30721 (US)
(72) Inventor: Payne, Barclay, Cartersville, Georgia 30120 (US); Jaquith, Forrest, Acworth, Georgia 30101 (US)
(74) Representative: Deans, Michael John Percy

(56) References cited:
- EP-A1- 1 598 476
- EP-A1- 2 011 919
- WO-A1-2016/128360
- GB-A- 1 090 345
- JP-A- 2012 026 130
- JP-A- 2017 198 043
- JP-A- H11 241 308
- KR-A- 20120 134 073
- KR-B1- 101 259 738
- KR-B1- 102 096 246
- US-A- 3 709 771
- US-A- 4 705 706
- US-A1- 2002 132 084
- US-A1- 2005 260 380
- US-B1- 7 364 634
- US-B1- 8 968 502

## Description

The disclosure relates to pile fabrics and the formation of pile fabrics.

Pile fabrics (which include tufted carpets, carpet tiles, artificial turf, rugs and mats, for example) generally are formed of pile tufts that are stitched into a backing layer and then bonded to the backing layer by a binder. Currently in the art, binders such as styrene butadiene rubber, vinyl acetate ethylene, natural rubber, hot melt thermoplastics and polyurethane are utilized to create a tuft bind and delamination in the pile fabric. The application of binders can be an expensive method and process for producing pile fabric with tuft bind and delamination. Additionally, the utilization of such binders can reduce the ability to recycle spent or discarded pile fabric, which results in the disposal of the spent pile fabric in landfills. Moreover, these processes may also utilize a lot of energy associated with drying or curing of the binder material.

Therefore, what is needed are improvements for addressing one or more of these perceived shortcomings.

A number of proposals have been made in the prior art, but none of them overcomes the perceived shortcomings.

WO 2016/128360 of DSM IP Assets B.V. proposes to manufacture a pile fabric by forming a pile on the front surface of a conventional primary backing layer provided with a second porous layer formed of thermoplastic, melting the thermoplastic layer by hot calendaring and cooling the melted thermoplastic about locked ends of the pile. A second backing layer may be connected by adhesive.

EP 1598476 of Klieverik Heli B.V. proposes placing a thermoplastic pile into the front of a backing sheet, sprinkling an adhesive on to the rear of the backing sheet, and uniting the adhesive with the thermoplastic material of the pile by hot calendaring.

US 4705706 Avery proposes use of a tufted yarn with a significantly lower melting temperature than the backing sheet into which the pile is stitched and melting the back loops of the pile without melting the backing sheet. This essential difference in melting temperatures would make the resultant pile fabric hard to recycle.

US 2002/0132084 Fink et al. proposes, with reference to Fig. 8, a process for forming a pile fabric. A thermoplastc coating is extruded on to the back of a primary backing. Pile tufts are applied, extending through the primary backing and the thermoplastic coating leaving pile loops on the back side. The back side of the product is subject to heat and pressure by hot calendaring, resulting in partial melting of filaments in the pile loops. A second thermoplastic layer is applied to the back of the product while still hot from the previous step, which is said to result in some fusing of the second layer with the back pile loops and with the first thermoplastic coating. The resultant product would not be easy to recycle and water would be unable to pass through it, making this process unsuitable for producing artificial turf.

KR 2012-0134073 of Kolonglotech proposes manufacture of artificial turf using a backing with multiple layers through which the pile tufts extend. The exposed portions of the pile on the back side of the product are said to be melted and heat sealed to the rear side of the multiple layer backing sheet by hot calendaring.

JP H11 241308 of Sumitomo Rubber Ind. proposes manufacture of artificial turf by using a two-layer backing sheet formed of woven polypropylene and a non-woven layer of polyester fibre into which pile tufts of polypropylene are inserted. Back stitch parts of the pile are said to be heated and melted by hot calendaring to weld the pile to the nonwoven layer.

EP 2011919 of Mondo S.p.A. proposes in Fig. 7 distributing solid granules of polyolefin over a backing pad. Pile tufts are said to be inserted through the solid granular layer and the pad, and a mesh formed from a high melting point material and a low melting point material is applied to the back of the product with heat and pressure by hot calendaring. This is said to produce localized melting and mutual bonding of the low melting point material in the mesh, the back loops of the pile, and the granular material, while still allowing free draining through the resultant artificial turf.

GB1090345 is said to lock the bases of the tufts on the back of a tufted carpet to a conventional carpet base by applying a flame from a gas burner at an angle to the back of the carpet so as to impinge on the bases of the tufts while the tufts screen areas of the carpet base between the tufts from the flame. The result is said to be that the bases of the tufts fuse and flow to securely bond the tufts to the carpet base.

JP 2017 198043 Sekisui Jushi KK et al. proposes a drainage member for artificial turf in which the drainage member allows drainage of water therethrough. The drainage member comprises a porous base cloth in which tufts of artificial grass are set. On the rear side of the porous cloth base, the artificial grass tuft is melted by a heated roller to block passage of sand or gravel through the through hole in the cloth base in which the tuft of artificial grass is received.

In accordance with one aspect of this disclosure, there is provided a method for forming a pile fabric, formed only of thermoplastic material, the pile fabric having a a front and a back, the method comprising: providing a thermoplastic primary backing material, a second layer of thermoplastic material, and a plurality of thermoplastic pile tufts, the primary backing material being configured as a sheet having a front side oriented at the front of the pile fabric and an opposing back side oriented at the back of the pile fabric, the second layer being disposed at the back side of the primary backing material, each of the plurality of pile tufts extending through the primary backing material and at least partially into the second layer with back stitch portions of the pile tufts being disposed at the back side of the primary backing material; and heating the back of the pile fabric by a method that exposes the back stitch portions of the pile tufts and the second layer to an open flame and cooling the front of the pile fabric for at least a portion of the time during which the back of the pile fabric is heated, whereby to melt the back stitch portions of the pile tufts and the second layer to form a melt bond disposed at the back side of the primary backing material to secure the pile tufts to the primary backing material without melting the front of the pile fabric and preferably avoiding the use of a binder composition.

In some embodiments, exposing the back stitch portions of the pile tufts and the second layer of thermoplastic material to the open flame is performed at a location where the primary backing material is redirected about a roller with the back side of the primary backing material facing outwardly from the roller.

In some embodiments, the melt bond is formed without the primary backing material being tentered.

In some embodiments, the cooling is performed by a first chill roller as the primary backing material, the second layer of thermoplastic material and the plurality of pile tufts are conveyed about the first chill roller.

In some embodiments, while molten, the back stitch portions of the pile tufts and the layer of thermoplastic material are pressed against the back side of the primary backing material.

In some embodiments, the pressing is performed with a second chill roller.

In some embodiments, the second chill roller is wetted to reduce a potential for the pile tufts and the second layer of thermoplastic material to stick to the second chill roller.

We also describe a recyclable pile fabric formed entirely of thermoplastic materials, and comprising: a front and a back; a primary backing material configured as a sheet having a front side oriented at the front of the pile fabric and a back side oriented at the back of the pile fabric; a second layer disposed at the back side of the primary backing material; a plurality of pile tufts, each of the plurality of pile tufts extending through the primary backing material and at least partially into the second layer with back stitch portions of the pile tufts being disposed at the back side of the primary backing material; and a melt bond formed of melted material of the back stitch portions of the pile tufts and melted material of the second layer of thermoplastic material; the melt layer being disposed only at the back of the primary backing material, the front of the pile fabric being unmelted; and the melt bond being formed only from the said melted materials without additional adhesive or binder.

The pile fabric may be configured as artificial turf.

The pile fabric is preferably liquid permeable.

The melt bond may define voids, configured as areas of liquid permeability, at which the back side of the primary backing material lacks the melted material of the second layer.

The second layer may be configured as a sheet.

The pile fabric may be configured as carpet.

The pile fabric may further comprise a secondary backing material, configured as a sheet, adhered to the back side of the primary backing material by the melt bond.

The primary backing material may exhibit transverse shrinkage due to exposure to heat.

A more complete understanding of the disclosure may be had by reference to the following Detailed Description when taken in conjunction with the accompanying drawings, in which like reference numerals indicate corresponding parts throughout the several views, in which:-
FIG. 1 is a schematic, cut-away view of an example component configuration for forming pile fabric;
FIG. 2A is a schematic, cross-sectional view of an example component configuration for forming pile fabric, as viewed along line 2-2 of FIG. 1, when the second thermoplastic layer is configured as a sheet;
FIG. 2B is a schematic, cross-sectional view of another example component configuration for forming pile fabric, as viewed along line 2-2 of FIG. 1, when the second thermoplastic layer is configured as a layer of fibers;.
FIG. 3 is a schematic, cut-away, plan view of an example pile fabric showing detail of an example melt bond;
FIG. 4 is a schematic, cross-sectional view of the pile fabric of FIG. 3, as viewed along line 4-4;
FIG. 5 is a flowchart depicting an example method for forming a pile fabric;
FIG. 6 is a schematic diagram depicting a system for forming a pile fabric;
FIG. 7 is a schematic diagram depicting an example assembly for melting material during processing.
FIG. 8A is a schematic, cut-away, plan view of an example pile fabric showing detail of adjacent back stitch portions prior to melting.
FIG. 8B is a schematic, cut-away, plan view of the example pile fabric of FIG. 8A showing detail of the adjacent back stitch portions after pressing.
FIG. 9 is a schematic diagram depicting another system for forming a pile fabric and
FIG. 10 is a schematic, cross-sectional view of another example pile fabric.

As will be described in greater detail, our pile fabrics, systems for forming pile fabrics and methods for forming pile fabrics avoid the use of binder compositions, thus potentially reducing material and/or energy costs and enabling the recycling of a larger quantity of spent pile fabrics, which reduces the accumulation of pile fabric waste. In some applications, such as those that utilize olefin-based primary backing materials, thermal stability may be improved by heat stabilizing (pre-shrinking) the materials prior to use. The omission of binder compositions is facilitated by a melt bond that secures pile tufts to the primary backing material of the pile fabric. The melt bond, which is disposed only at the back side of the primary backing material, is formed of melted material of the back stitch portions of the pile tufts and melted material of the second layer of thermoplastic material. Only the back of the pile fabric is heated to melt the back stitch portions of the pile tufts and the layer of thermoplastic material to form the melt bond, with melting of the materials of the melt bond being performed by exposure to an open flame.

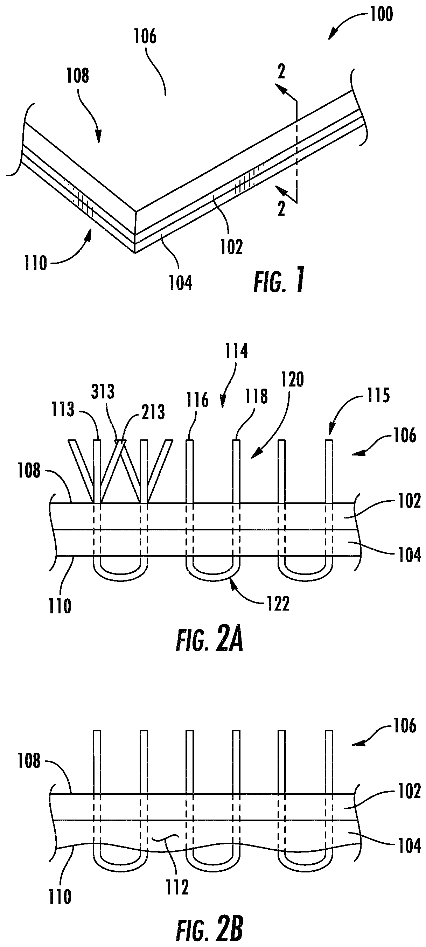

In FIG. 1, an example component configuration 100 for forming pile fabric (that is, an arrangement of constituent components prior to heating and/or otherwise forming those components into a pile fabric) is depicted. Component configuration 100 includes a primary thermoplastic backing material 102, a second layer of thermoplastic material 104 and a plurality of pile tufts 106. Primary backing material 102 is configured as a sheet with a front side 108 oriented at what is to become the front of the pile fabric and a back side 110 oriented at what is to become the back of the pile fabric. Primary backing material 102 may be formed of one or more of various thermoplastic materials such as olefins (e.g., polypropylene or polyethylene) or polyesters.

The second layer of thermoplastic material 104 is disposed at the back side 110 of primary backing material 102 and may be provided in various configurations depending upon the desired application. By way of example, FIG. 2A depicts the second layer of thermoplastic material 104 configured as a sheet, whereas FIG. 2B depicts the second layer of thermoplastic material 104 configured as a layer of fibers (note that only a portion of a fiber 112 is shown). In some applications, the fibers may incorporate one or more of continuous fibers and/or staple fibers. Preferably, the second layer of thermoplastic material 104 exhibits a melting temperature that is less than or equal to the melting temperature of primary backing material 102.

The plurality of pile tufts 106 (which are depicted schematically in FIG. 1 as a layer for ease of illustration) are formed of lengths of tufted face yarn that extends through primary backing material 102 and at least partially into the second layer of thermoplastic material 104 as shown in FIG. 2A and 2B. Typically, the pile tufts are arranged in rows and columns. Each pile tuft (e.g., pile tufts 113, 114, 115, 213 and 313) includes a back stitch portion that is disposed at the back side of primary backing material 102. For instance, pile tuft 114 incorporates a free end 116 and a free end 118, with an intermediate portion 120 extending between the free ends. Back stitch portion 122 of pile tuft 114 is the part of intermediate portion 120 that protrudes beyond the back side 110 of primary backing material 102.

Pile tufts may be formed of one or more of various thermoplastic materials, such as polyethylene (PE), polypropylene (PP), polyester, nylon 6 6 and/or nylon 6 as nonlimiting examples. Preferably, the pile tufts exhibit a melting temperature that is less than or equal to the melting temperature of primary backing material 102. Additionally, pile tufts may be provided in various configurations depending upon the desired application. By way of example, when the pile fabric is configured as artificial turf, the pile tufts may be configured as lengths of slit tape or monofilament yarn. In contrast, when the pile fabric is configured as carpet, bulk continuous filament and spun yarn can be used. The pile fabric is a recyclable pile fabric that is formed only of compatible thermoplastic materials. For instance, all of the materials used may be olefin-based materials (e.g., PE and/or PP) or all of the materials used may be polyester materials.

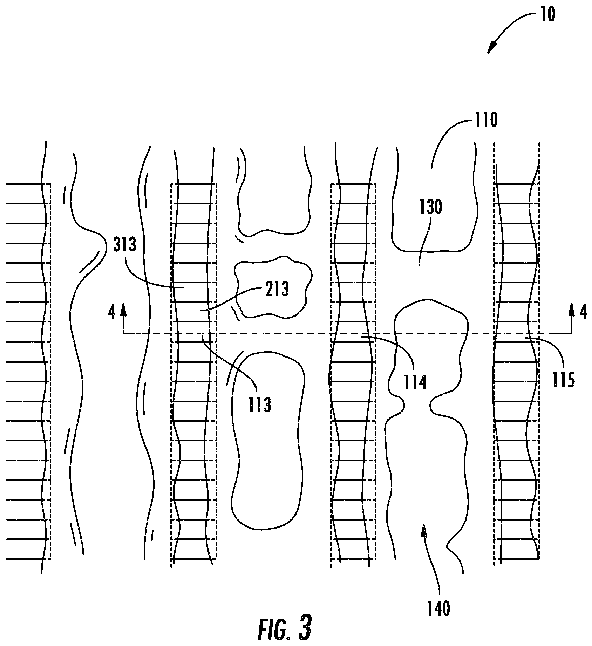

As shown in FIG. 3, after the back stitch portions of the pile tufts and layer of thermoplastic material 104 are melted and subsequently cooled, a melt bond 130 is provided that secures the pile tufts 106 to primary backing material 102 to form pile fabric 10. It should be noted that melt bond 130 is disposed only at back side 110 of primary backing material 102. Melt bond 130 defines voids (void 140, for example) that are configured as locations at which back side 110 of primary backing material 102 lacks material that was melted to form melt bond 130. When primary backing material 102 is liquid permeable, the voids provide areas of liquid permeability for the pile fabric 10. So configured, the tuft bind and delamination of the pile fabric may not be compromised by being liquid permeable as is often the case with conventional practices. By way of example, styrene butadiene rubber is a water soluble material that is often used in carpet; however, exposure to water tends to result in tuft bind and delamination weakness. In an effort to avoid these weaknesses, polyurethane may be used instead; however, polyurethane is not liquid permeable.

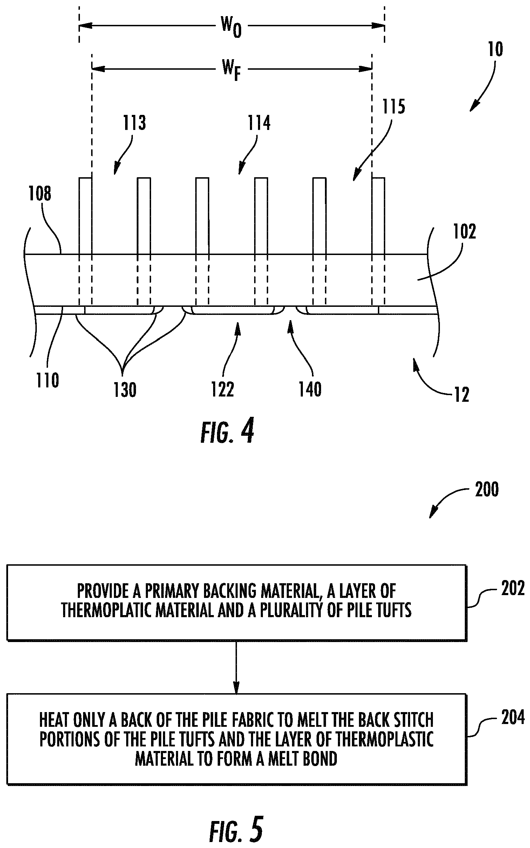

FIG. 4 depicts a cross-section of pile fabric 10. As shown, melt bond 130 is disposed at a back 12 of pile fabric 10 and is formed of material of the back stitch portions and material of the second layer of thermoplastic material. Preferably, the material of melt bond 130, including that of the back stitch portions, is pressed against primary backing material 102 prior to cooling and takes a final (e.g., flattened) form. Note also that the pile tufts extend across a width (W_{F}) of primary backing material 102 that exhibits transverse shrinkage due to exposure to heat. Specifically, the width changes from an original width (Wo) prior to heating to a final width (W_{F}) after heating. Notably, the shrinkage that takes place depends, at least in part, on the weight of the materials. Those of lighter weights tend to shrink more because there are often fewer yarns to prevent shrinkage, whereas those of heavier weights tend to shrink less because there are more yarns to prevent the carpet from shrinking. Regardless, the characteristic change in dimension of primary backing material 102 in response to heating is permitted to occur in some applications by not tentering (i.e., a transverse stretching force not being applied) across the width of the primary backing material. This tends to prevent transverse stresses from being locked into the matrix of the pile fabric that may result in unwanted rippling of the pile fabric.

Conventionally, manufacturers have tended to incorporate polyester (which has a melting temperature of approximately 260 °C-500 °F) into their primary backing materials when producing artificial turf or carpet tile so that shrinking does not occur after installation due to exposure to high temperatures. For instance, artificial turf is known to experience exposure to 88 °C-190 °F after installation. However, polyester (e.g., PET) and olefin-based materials cannot be recycled together due to the significant differences in melting points. By subjecting an olefin-based primary backing material, while under little stress/tension (no tentering), to a temperature that it should not be exposed to after installation provides enhanced thermal stability pile fabrics formed of these lower melting point materials.

FIG. 5 is a flowchart depicting an example method 200 for forming a pile fabric. As shown in FIG. 5, the method may be construed as beginning at block 202, in which a primary backing material, a second layer of thermoplastic material, and a plurality of pile tufts are provided. Preferably, the primary backing material is configured as a sheet with a front side oriented at the front of the pile fabric and an opposing back side oriented at the back of the pile fabric. The second layer of thermoplastic material is disposed at the back side of the primary backing material. Additionally, each of the plurality of pile tufts extends through the primary backing material and at least partially into the second layer with back stitch portions of the pile tufts being disposed at the back side of the primary backing material. In block 204, only the back of the pile fabric is heated to melt the back stitch portions of the pile tufts and the second layer of thermoplastic material to form a melt bond disposed at the back side of the primary backing material. The heating is performed by exposing the back stitch portions of the pile tufts and the layer of thermoplastic material to an open flame without damaging the primary backing material or the non-back stitch portions (face yarn portions) of the pile tufts. Formation of the melt bond secures the pile tufts to the primary backing material.

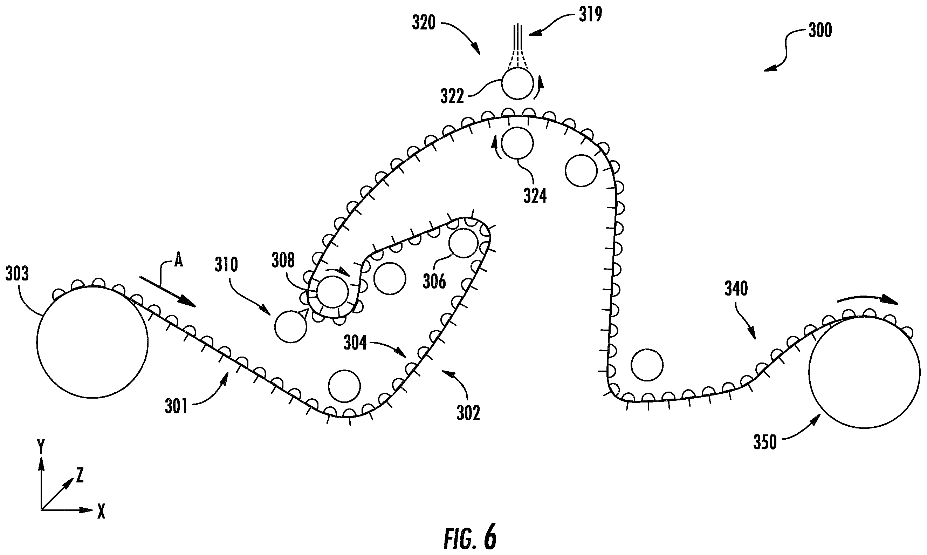

FIG. 6 is a schematic diagram depicting a system for forming a pile fabric. As shown in FIG. 6, system 300 is configured to receive material (constituent components) 301 that is conveyed along a processing path of system 300 in a processing direction (indicated by arrow A) that is generally aligned with a lengthwise span of material 301. Material 301, which may be provided by material supply 303 (e.g., a griege roll), includes a primary backing material, a second layer of thermoplastic material and a plurality of pile tufts (such as described before), with 302 indicating the front side (face yarn side) and 304 indicating the back side (back stich portions).

System 300 incorporates various rollers along the processing path, such as roller 306 (which may be an idler roller) and roller 308. Roller 308 is positioned to redirect material 301 to draw apart and expose the back stitch portions. Specifically, roller 308 is configured to engage front side 302 so that back side 304 and its associated back stitch portions are exposed at the outermost diameter of roller 308 as the material travels about the roller. A gas-fueled assembly 310 is configured to direct an open flame toward roller 308 and the exposed back stitch portions of material 301. Notably, exposure to the open flame for forming a melt bond preferably is performed without the primary backing material being tentered (i.e., tensioned in the transverse direction along the z-axis).

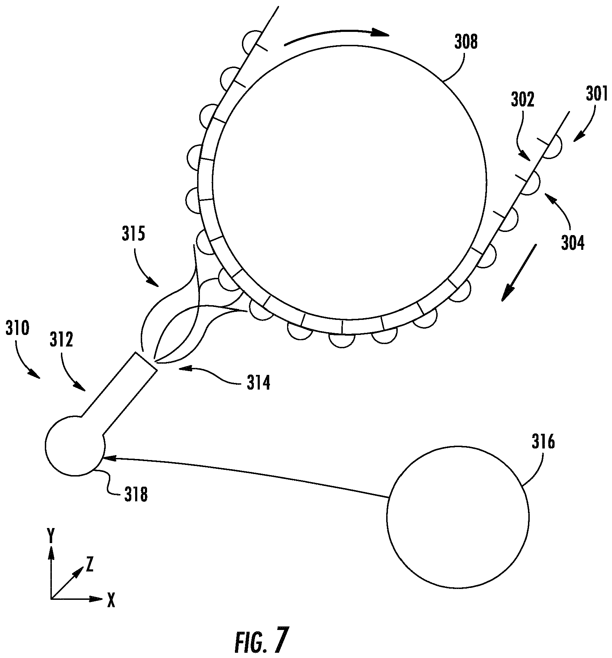

As shown in greater detail in FIG. 7, an example gas-fueled assembly 310 incorporates a flame singer 312 with an associated outlet 314, which is positioned adjacent to roller 308 to provide an open flame 315. Preferably, flame singer 312 receives a flow of fuel (e.g., propane gas) from a fuel supply 316 via a gas manifold 318. Although only one outlet is depicted, multiple outlets communicating with manifold 318 may be provided at intervals extending across the transverse (z-axis) direction of the processing path to melt material simultaneously across the width of material 301. In some applications, such as when the flame singer is configured to provide a flame across a width of 188 inches (477.52 cm), flame singer 312 may generate approximately 500,000 BTU/hour (146,500 Watts/hour).

Flame singer 312 exposes only the back stitch portions of the pile tufts and the second layer of thermoplastic material to open flame 315 across the width of the material 301 to melt the back stitch portions and the second layer of thermoplastic material while the material is conveyed about roller 308. To reduce the temperature of front side 302 in the vicinity of open flame 315, roller 308 is a chill roller (which may exhibit a surface temperature of between approximately 70 degrees F (21.11 degrees C) and approximately 100 degrees F (37.78 degrees C)) that helps prevent damaging the face yarns of the pile fabric. Use of a chill roller may also enable the use of a higher flame temperature (a temperature between approximately 400 degrees F (204.44 degrees C) and approximately 525 degrees F (273.89 degrees C), preferably between approximately 400 degrees F (204.44 degrees C) and approximately 475 degrees F (246.11 degrees C)), which provides for efficient melting and increased conveyance speeds. For instance, a conveyance speed of between approximately 10 ft/min (3.046 m/min) and approximately 15 ft/min (4.569 m/min) may be achieved with a flame temperature at or above approximately 400 degrees F (204.44 degrees C).

After melting of the back stitch portions and the layer of thermoplastic material to form a melt bond, molten material 301 may be pressed (calendared) against the back side of the primary backing material by a pressing assembly 320. In the example of FIG. 6, pressing assembly 320 includes opposing rollers 322 and 324, with roller 322 being wetted (such as by sweating or applying liquid) to ensure that the exterior surface of the roller is wet when contacting the material. Notably, sweating the roller involves operating the roller at a temperature that produces condensate (due to atmospheric humidity) on an exterior surface of the roller. Additionally, or alternatively, a liquid (e.g., water) may be applied to an exterior surface of the roller such as by an applicator 319. These operations may reduce a tendency of heated materials to stick to the roller and/or damage the pile tufts and/or and primary backing material. Depending on the application, roller 324 may be optionally heated or chilled.

After pressing, an adequate conveyance time along the processing path is provided to permit cooling of the formed pile fabric 340. Specifically, conveyance time is provided to permit cooling of the melt bond, which is disposed only at the back side of the primary backing material. Pile fabric 340 may then be gathered, such as by spooling onto a roll 350.

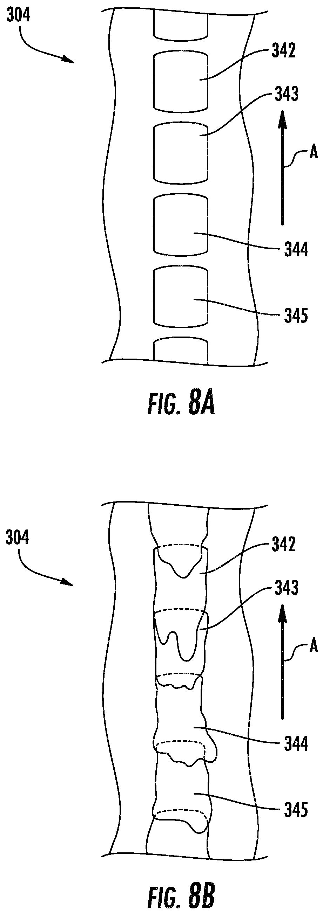

As shown in greater detail in FIG. 8A, several back stitch portions (e.g., 342, 343, 344, 345) protruding from back side 304 are oriented in a column along the processing direction (shown by arrow A corresponding to the processing direction shown in FIG. 7). Specifically, the back stitch portions are shown prior to being melted by an open flame. The back stitch portions are arranged based on the desired characteristics of the final pile fabric and, thus, may vary in spacing. It should be noted, however, that adjacent back stitch portions are not physically attached to each other even though abutting may occur. FIG. 8B shows the back stitch portions after melting and pressing. Of significance, each of the back stitch portions now adheres to adjacent back stitch portions (in addition to the melted thermoplastic layer as described before) forming a generally continuous melt bond (chain linking) of back stitch portions along the length of each such column. This configuration of the melt bond is believed to provide an enhanced bond and better turf bind.

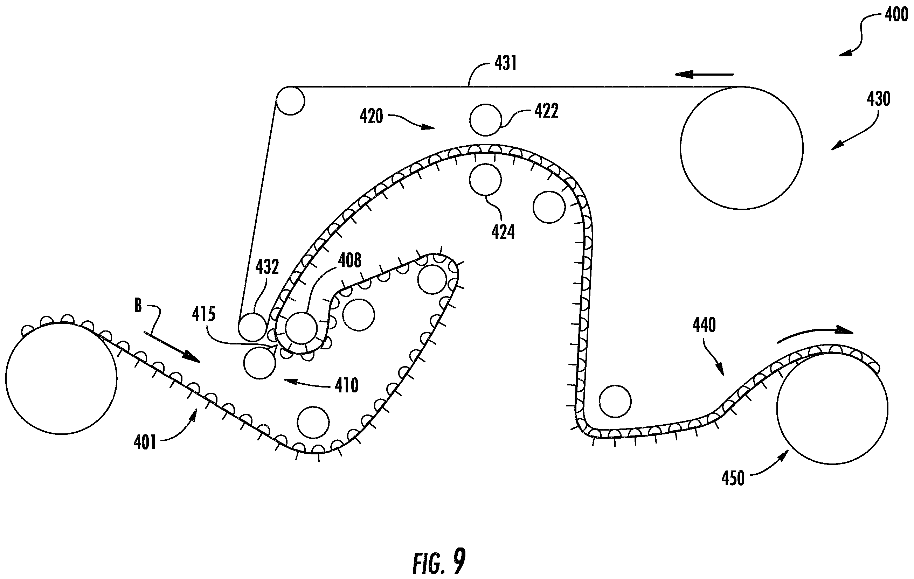

FIG. 9 is a schematic diagram depicting another system for forming a pile fabric. As shown in FIG. 9, system 400 incorporates many components similar to those described previously with respect to system 300. For instance, system 400 is configured to receive material 401, which may be provided by material supply 403, for conveyance along a processing path (indicated by arrow B). A roller 408 is positioned to redirect material 401 to draw apart and expose the back stitch portions as the material travels about the roller. A gas-fueled assembly 410 is configured to direct an open flame toward roller 408 and the exposed back stitch portions of material 401.

In contrast to system 300, however, system 400 further includes a supply 430 of secondary backing material 431. Secondary backing material 431 enters the processing path along which material 401 travels in a vicinity of (i.e., at or downstream of) open flame 415, which is used to melt the back stitch portions and layer of thermoplastic material of material 401. Entering the processing path at this location positions secondary backing material 431 for adhering to the molten material used to form the melt bond. It should be noted that secondary backing material 431 also is a thermoplastic material and, depending on the application, the side of secondary backing material 431 that will be adhered to the pile fabric may be exposed to the open flame and melted. Roller 432, which directs secondary backing material for entry into the processing path, may be a chill roller depending on the application.

After melting of the back stitch portions and the second layer of thermoplastic material to form a melt bond, molten material 401 may be pressed (calendared) between the back side of the primary backing material and a side of secondary backing material 431, which may or may not be molten on the side being pressed into the back stitch, by a pressing assembly 420. In the example of FIG. 9, pressing assembly 420 includes opposing rollers 422, 424, each of which may be optionally heated or chilled.

After pressing, an adequate conveyance time along the processing path is provided to permit cooling of the formed pile fabric 440. Thereafter, pile fabric 440 may be gathered, such as by spooling onto a roll 450.

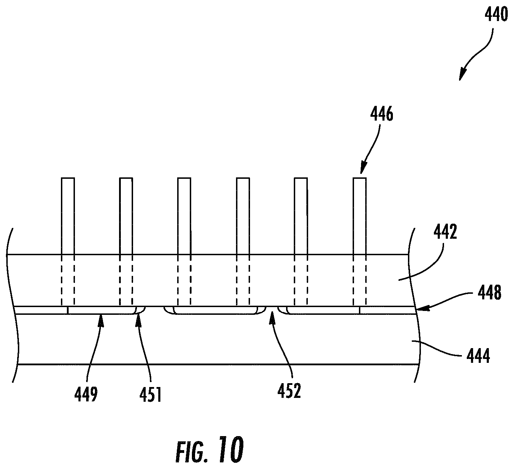

FIG. 10 is a schematic, cross-sectional view of an example pile fabric 440 that may be formed by system 400, for example. As shown in FIG. 10, pile fabric 440 includes a primary backing material 442, a secondary backing material 444 and a plurality of pile tufts (e.g., pile tuft 446). Notably, both primary backing material 442 and secondary backing material 444 are configured as sheets of material. A melt bond 448 is disposed between primary backing material 442 and secondary backing material 444, with melt bond 448 adhering primary backing material 442 to secondary backing material 444, as well as securing the pile tufts to primary backing material 442. Melt bond 448 is formed of material from the back stitch portions (e.g., back stitch portion 449) and the second layer of thermoplastic material 451 It should be noted that, in some embodiments, one or more voids (e.g., void 452) defined by melt bond 448 may be present.

Although preferred embodiments have been illustrated in the accompanying Drawings and described in the foregoing Detailed Description, it should be understood that other embodiments are feasible.

## Claims

1. A method for forming a pile fabric, formed only of thermoplastic material, the pile fabric having a front and a back, the method comprising:
providing a thermoplastic primary backing material (102), a second layer of thermoplastic material (104), and a plurality of thermoplastic pile tufts (106), the primary backing material (102) being configured as a sheet having a front side (108) oriented at the front of the pile fabric and an opposing back side (110) oriented at the back of the pile fabric, the second layer (104) being disposed at the back side of the primary backing material (102), each of the plurality of pile tufts (106) extending through the primary backing material (102) and at least partially into the second layer (104)with back stitch portions (122) of the pile tufts (106) being disposed at the back side of the primary backing material; and
heating the back of the pile fabric by a method that exposes the back stitch portions (122) of the pile tufts and the second layer (104) to an open flame (315), and cooling the front of the pile fabric for at least a portion of the time during which the back of the pile fabric is heated, whereby to melt the back stitch portions (122) of the pile tufts and the second layer (104)to form a melt bond (130) disposed at the back side of the primary backing material (102) to secure the pile tufts (106) to the primary backing material (102) without damaging the primary backing material or the non-back stitch portions of the pile tufts and preferably avoiding the use of a binder composition.

2. The method of claim 1, wherein exposing the back stitch portions (122) of the pile tufts (106) and the second layer (104) to the open flame (315) is performed at a location where the primary backing material (102) is redirected about a roller (308) with the back side (110) of the primary backing material (102) facing outwardly from the roller (308).

3. The method of claim 1, wherein the melt bond (130) is formed without the primary backing material (102) being tentered.

4. The method of claim 1, wherein the cooling is performed by a first chill roller (308) as the primary backing material (102), the second layer (104) and the plurality of pile tufts (106) are conveyed about the first chill roller (308).

5. The method of claim 1, further comprising pressing, while molten, the back stitch portions (122) of the pile tufts (106) and the second layer (104) against the back side (110) of the primary backing material (102),
the pressing being performed with a second chill roller (322); and
the method further comprises wetting the second chill roller (322) to reduce a potential for the pile tufts (106) and the second layer (104) to stick to the second chill roller (322).

6. The method of claim 1, further comprising adhering a secondary backing material, configured as a sheet, to the back side of the primary backing material by the melt bond.

## Patentansprüche

1. Verfahren zur Herstellung eines ausschließlich aus thermoplastischem Material bestehenden Florgewebes mit Vorder- und Rückseite, wobei das Verfahren Folgendes umfasst:
Bereitstellen eines thermoplastischen Primärträgermaterials (102), einer zweiten Schicht aus thermoplastischem Material (104) und mehrerer thermoplastischer Florbüschel (106), wobei das Primärträgermaterial (102) als Folie mit einer Vorderseite (108), die zur Vorderseite des Florgewebes gerichtet ist, und einer gegenüberliegenden Rückseite (110), die zur Rückseite des Florgewebes gerichtet ist, ausgebildet ist, wobei die zweite Schicht (104) auf der Rückseite des Primärträgermaterials (102) angeordnet ist, wobei jeder der mehreren Florbüschel (106) durch das Primärträgermaterial (102) hindurch und zumindest teilweise in die zweite Schicht (104) hineinragt, wobei die Rückstichabschnitte (122) der Florbüschel (106) auf der Rückseite des Primärträgermaterials angeordnet sind; und
Erhitzen der Rückseite des Florgewebes durch ein Verfahren, bei dem die Rückstichbereiche (122) der Florbüschel und die zweite Lage (104) einer offenen Flamme (315) ausgesetzt werden, und Kühlen der Vorderseite des Florgewebes für mindestens einen Teil der Zeit, in der die Rückseite des Florgewebes erhitzt wird, wodurch die Rückstichbereiche (122) der Florbüschel und die zweite Lage (104) zu einer Schmelzbindung (130) auf der Rückseite des primären Trägermaterials (102) verschmelzen, um die Florbüschel (106) mit dem primären Trägermaterial (102) zu verbinden, ohne das primäre Trägermaterial oder die nicht rückstichbesetzten Bereiche 20 der Florbüschel zu beschädigen, und vorzugsweise auf die Verwendung eines Bindemittels verzichten.

2. Verfahren nach Anspruch 1, wobei die Rückseiten der Florbüschel (106) und die zweite Lage (104) an einer Stelle, an der das primäre Trägermaterial (102) um eine Walze (308) geführt wird, der offenen Flamme (315) ausgesetzt werden, wobei die Rückseite (110) des primären Trägermaterials (102) von der Walze (308) nach außen zeigt.

3. Verfahren nach Anspruch 1, wobei die Schmelzverbindung (130) gebildet wird, ohne dass das primäre Trägermaterial (102) gedämpft wird.

4. Verfahren nach Anspruch 1, wobei die Kühlung durch eine erste Kühlwalze (308) erfolgt, während das primäre Trägermaterial (102), die zweite Lage (104) und die Florbüschel (106) um die erste Kühlwalze (308) geführt werden.

5. Verfahren nach Anspruch 1, ferner umfassend das Pressen der Rückstichabschnitte (122) der Florbüschel (106) und der zweiten Schicht (104) im geschmolzenen Zustand gegen die Rückseite 10 (110) des primären Trägermaterials (102),
wobei das Pressen mit einer zweiten Kühlwalze (322) erfolgt;
und das Verfahren ferner umfassend das Befeuchten der zweiten Kühlwalze (322), um ein Anhaften der Florbüschel (106) und der zweiten Schicht (104) an der zweiten Kühlwalze (322) zu verringern.

6. Verfahren nach Anspruch 1, ferner umfassend das Aufbringen eines als Folie konfigurierten sekundären Trägermaterials auf die Rückseite des primären Trägermaterials durch Schmelzbindung.

## Revendications

1. Procédé de fabrication d'un tissu à poils, composé exclusivement de matériau thermoplastique, ce tissu présentant un recto et un verso, le procédé comprenant :
la fourniture d'un support primaire thermoplastique (102), d'une seconde couche de matériau thermoplastique (104) et de plusieurs touffes de poils thermoplastiques (106), le support primaire (102) étant configuré comme une feuille présentant une face avant (108) orientée vers l'avant du tissu à poils et une face arrière opposée (110) orientée vers l'arrière du tissu à poils, la seconde couche (104) étant disposée au verso du support primaire (102), chaque touffe de poils (106) traversant le support primaire (102) et pénétrant au moins partiellement dans la seconde couche (104), les points de couture arrière (122) des touffes de poils (106) étant disposés au verso du support primaire ; et
chauffer l'envers du tissu à poils par un procédé exposant les parties de point arrière (122) des touffes de poils et la seconde couche (104) à une flamme nue (315), puis refroidir l'endroit du tissu à poils pendant au moins une partie du temps de chauffage de l'envers, afin de faire fondre les parties de point arrière (122) des touffes de poils et la seconde couche (104) et de former une liaison par fusion (130) disposée à l'envers du matériau de support principal (102) pour fixer les touffes de poils (106) au matériau de support principal (102) sans endommager ce dernier ni les parties des touffes de poils non liées par le point arrière, et de préférence en évitant l'utilisation d'un liant.

2. Procédé selon la revendication 1, dans lequel l'exposition des parties arrière (122) des touffes de velours (106) et de la seconde couche (104) à la flamme nue (315) est réalisée à un endroit où le matériau de support principal (102) est dévié autour d'un rouleau (308), sa face arrière (110) étant orientée vers l'extérieur du rouleau (308).

3. Procédé selon la revendication 1, dans lequel la liaison par fusion (130) est formée sans que le matériau de support principal (102) soit tendu.

4. Procédé selon la revendication 1, dans lequel le refroidissement est effectué par un premier rouleau de refroidissement (308) tandis que le matériau de support principal (102), la seconde couche (104) et les touffes de velours (106) sont entraînés autour de ce premier rouleau (308).

5. Procédé selon la revendication 1, comprenant en outre le pressage, à l'état fondu, des parties de couture arrière (122) des touffes de velours (106) et de la seconde couche (104) contre la face arrière 10 (110) du matériau de support principal (102),
le pressage étant effectué à l'aide d'un second rouleau réfrigérant (322) ;
et le procédé comprenant en outre l'humidification du second rouleau réfrigérant (322) afin de réduire le risque d'adhérence des touffes de velours (106) et de la seconde couche (104) à ce rouleau.

6. Procédé selon la revendication 1, comprenant en outre le collage d'un matériau de support secondaire, sous forme de feuille, sur la face arrière du matériau de support principal par fusion.
